(19) Europäisches Patentamt
European Patent Office
Office européen des brevets

(11) **EP 4 107 594 B1**

(12) **EUROPÄISCHE PATENTSCHRIFT**

(45) Veröffentlichungstag und Bekanntmachung des Hinweises auf die Patenterteilung:
**15.10.2025  Patentblatt 2025/42**

(21) Anmeldenummer: **21705188.7**

(22) Anmeldetag: **12.02.2021**

(51) Internationale Patentklassifikation (IPC):
**G05B 19/418** *(2006.01)*  **B21B 37/00** *(2006.01)*
**G05B 13/02** *(2006.01)*

(52) Gemeinsame Patentklassifikation (CPC):
**G05B 19/41875; G05B 13/0265; B21B 37/00;
Y02P 90/02**

(86) Internationale Anmeldenummer:
**PCT/EP2021/053549**

(87) Internationale Veröffentlichungsnummer:
**WO 2021/165162 (26.08.2021 Gazette 2021/34)**

(54) **VERFAHREN ZUR AUTOMATISIERUNG EINER HÜTTENTECHNISCHEN ANLAGE, INSBESONDERE EINER ANLAGE ZUM WALZEN VON METALLBÄNDERN**

METHOD FOR AUTOMATING A METALLURGICAL INSTALLATION, IN PARTICULAR AN INSTALLATION FOR ROLLING METAL STRIPS

PROCÉDÉ D'AUTOMATISATION D'UNE INSTALLATION MÉTALLURGIQUE, EN PARTICULIER UNE INSTALLATION DE LAMINAGE DE BANDES MÉTALLIQUES

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.02.2020  DE 102020202273**

(43) Veröffentlichungstag der Anmeldung:
**28.12.2022  Patentblatt 2022/52**

(73) Patentinhaber: **SMS group GmbH
41069 Mönchengladbach (DE)**

(72) Erfinder:
• **SIEGHART, Jörn
40721 Hilden (DE)**

• **SPIES, Wolfgang
57072 Siegen (DE)**

(74) Vertreter: **Kross, Ulrich
Hemmerich & Kollegen
Patentanwälte
Hammerstraße 2
57072 Siegen (DE)**

(56) Entgegenhaltungen:
EP-A- 2 407 256    EP-A- 3 112 961
EP-A- 3 358 431    EP-A2- 1 324 165
WO-A1-00/59678     DE-A1- 10 122 322

**Beschreibung**

Verfahren zur Automatisierung einer hüttentechnischen Anlage, insbesondere einer Anlage zum Walzen von Metallbändern

Die Erfindung betrifft ein Verfahren zur Automatisierung einer Anlage zum Walzen von Metallbändern, umfassend wenigstens eine Walzstraße mit wenigstens einem Walzgerüst, wobei das Verfahren unter Verwendung eines mehrstufigen Leitsystems, umfassend wenigstens eine Level-1 Automation eine Level-2 Automation und ggf. eine Level-3 Automation, durchgeführt wird, wobei in der Level-2 Automation eine Vorabberechnung der Arbeitsgrößen der Anlage in Form von Setzwerten für die Level-1 Automation erfolgt.

Solche Leitsysteme sind zum Überwachen und Steuern von Anlagen zum Walzen metallener Produkte gebräuchlich.

Größere Leitsysteme sind in der Regel mehrstufig aufgebaut. Häufig sind unterlagerte Regler vorhanden, denen von einer übergeordneten Einrichtung Sollwerte vorgegeben werden. Die Sollwerte können momentan gültige Sollwerte oder Sollwertverläufe sein. In der Regel berechnen Level-2 Systeme die Sollwerte mittels Online-Optimierungsalgorithmen, die ihrerseits auf Online-Modelle der zu steuernden Anlage zurückgreifen. Die Online-Modelle sind beispielsweise mathematischphysikalische Modelle oder KI-Systeme. Alternativ können Level-2 Systeme in vereinfachter Form als Vorgabetabellen ausgeführt sein. Aus der DE 10 2008 028 777 A1 ist beispielsweise ein Betriebsverfahren für ein Leitsystem mit einem Sollwertoptimierer bekannt.

Im Stand der Technik werden in Walzanlagen die Walzgerüste mit verschiedenen Automatisierungslösungen betrieben. Die Automatisierungslösungen werden kundenspezifisch bereitgestellt und sind im Hinblick auf ein vorgegebenes Optimierungsziel ausgerichtet. Der Betreiber einer solchen Anlage hat normalerweise nur eine geringe Flexibilität bezogen auf die Vorgaben des Walzprozesses, insbesondere da die regulären Anlagen-Betriebsmodi auf Volllast der Anlage ausgelegt sind. Insbesondere im Hinblick auf geplante oder ungeplante Stillstände der Anlage lassen bekannte Automatisierungslösungen nur einen sehr begrenzten Eingriff des Betreibers der Anlage zu.

Ein Verfahren zur automatischen Steuerung und/oder Regelung einer hüttentechnischen Anlage ist beispielsweise aus der DE 10 2010 036 112 A1 bekannt. Dem zuvor geschilderten Problem trägt das in der DE 10 2010 36 112 A1 beschriebene Verfahren dadurch Rechnung, dass die Anlage in einem Sparmodus betrieben werden kann, in dem der Verbrauch an elektrischer Energie und/oder Medien vermindert ist. Dabei ist insbesondere eine Minimierung von Verbräuchen an elektrischer Energie und Medien wie Gasen, Wasser, Schmiermitteln und dergleichen bei einem Stillstand oder teilweisen Stillstand der Anlage vorgesehen. Das erfolgt durch ein gezieltes und automatisches kontrolliertes Abschalten von Versorgungssystemen. Diese Automatisierungslösung ist verhältnismäßig einseitig auf einen konkret eingetretenen oder konkret geplanten Stillstand der Anlage ausgelegt und berücksichtigt nicht den Umstand, dass im Hinblick auf die Gesamtauslastung der Anlage zeitweilig unterschiedliche Optimierungsziele für die Automatisierungslösungen der Anlage wünschenswert sein könnten. Diesbezüglich liefert die DE 10 2010 36 112 A1 keine Lösungsansätze.

Das Dokument DE 101 22 322 A1 beschreibt ein Verfahren zur Führung eines Warmwalzprozesses, wobei das Verfahren sich insbesondere durch eine übergreifende hierarchische Steuer- und Regelstruktur auszeichnet. Diese Struktur berücksichtigt die Zusammenhänge zwischen den Stahlverarbeitungsstufen und zielt auf eine Erreichung eines optimalen Endprodukts durch eine hierarchische Optimierung des gesamten Prozesses ab. Dabei ist eine Besonderheit dieses Verfahrens, dass die bestehende Trennung zwischen den Ebenen Level 0, Level 1 und Level 2 aufgehoben wird.

Die EP 1 324 165 A2 beschreibt ein modellbasiertes System, dass die modellbasierte Verteilung bestimmter Ressourcen, im vorliegenden Fall von Wasser. in einem Netzwerk steuert. Das System ist so ausgelegt, dass es die optimale Strategie zur Verteilung des Wassers auswählt.

Weiterer Stand der Technik ist aus den Dokumenten EP 3 112 961 A1 und EP 2 407 256 A1 bekannt.

Der Erfindung liegt daher die Aufgabe zugrunde, einen übergeordneten Automatisierungsansatz für eine hüttentechnische Anlage bereitzustellen, insbesondere für eine automatische Steuerung und/oder Regelung einer Anlage zum Walzen von metallenen Produkten bereitzustellen, mit der der Benutzer bzw. Anwender, insbesondere im Hinblick auf eine zeitweise unterschiedliche Auslastung der Anlage, das Optimierungsziel verändern kann.

Die Aufgabe wird gelöst durch ein Verfahren mit den Merkmalen des Anspruchs 1. Vorteilhafte Ausgestaltungen der Erfindung ergeben sich aus den Unteransprüchen.

Das Verfahren gemäß der Erfindung findet insbesondere beim Flachwalzen von metallenen Bändern in Walzstraßen mit Walzgerüsten Anwendung. Ein Teil der Automatisierung mittels eines mehrstufigen Leitsystems umfasst eine Vorgabe der Kundenauftragsdaten durch ein Level-3 System und den Einsatz einer Vorabberechnung der Arbeitsgrößen der Walzgerüste, wie z.B. Walzkraft, Walzgeschwindigkeit und Arbeitswalzenbiegung durch ein Level- 2 System. Diese Vorgaben werden an ein schnelles Automationssystem, das Level-1 System gesendet. Das Level-1 System regelt und steuert zuerst die von der Level-2 Vorgabe gesendeten Größen an und erzielt durch Regelsysteme, Vorsteuerungen und manuelle Eingriffe des Bedienpersonals das gewünschte Ergebnis, nämlich ein Metallband innerhalb der Planheits- und Dickentoleranz mit stabilem Bandzug. Dieser Teil der Automation betrifft ausschließlich einen Betriebsmodus der Walzstraße bzw. der Anlage, bei dem in der Regel die Qualität des Erzeugnisses Priorität hat bzw. Optimierungsziel ist. Die Erfindung beschreitet diesbezüglich einen neuartigen übergeordneten Automatisierungsansatz.

Nach einem Gesichtspunkt der Erfindung wird ein Verfahren zur Automatisierung und/oder Steuerung und/oder Regelung einer hüttentechnischen Anlage bereitgestellt, insbesondere einer Anlage zum Walzen von Metallbändern, wobei die Anlage wenigstens eine Walzstraße mit wenigstens einem Walzgerüst umfasst, wobei das Verfahren unter Verwendung eines mehrstufigen Leitsystems umfassend eine Level-1 Automation und eine Level-2 Automation durchgeführt wird, wobei in der Level-2 Automation eine Vorabberechnung der Arbeitsgrößen der Anlage in Form von Setzwerten für die Level-1 Automation erfolgt und das Verfahren weiterhin unter Verwendung eines dem Leitsystem übergeordneten EDV gestützten Priorisierungssystems durchgeführt wird, wobei das Priorisierungssystem die Auswahl vorgegebener Automatisierungsziele zum Betrieb der Anlage mit unterschiedlichen Optimierungsstrategien vornimmt und/oder ermöglicht und das Priorisierungssystem entsprechend dem gewählten Automatisierungsziel Optimierungsvorgaben erzeugt und diese an die Level-1 und/oder Level-2 Automation übergibt.

Das Verfahren gemäß der Erfindung erlaubt eine zumindest zeitweise strategische Priorisierung eines oder mehrerer Automatisierungsziele bzw. Optimierungsziele der Anlage wie beispielsweise die $CO_2$ Effizienz, die Energieeffizienz, die Anlagenproduktivität, die Produktqualität oder die Anlagenauslastung.

Der Erfindung liegt ein übergeordneter Automatisierungsansatz zugrunde, der eine Auswahl und/oder eine Ansteuerung verschiedener Automatisierungsziele bzw. verschiedener Betriebsszenarien der Anlage unter verschiedenen Priorisierungen bzw. unter verschiedenen Optimierungsgesichtspunkten umfasst.

Erfindungsgemäß kann die Auswahl der vorgegebenen Automatisierungsziele manuell über den Benutzer und/oder automatisch regelbasiert und/oder über ein Expertensystem und/oder mithilfe von künstlicher Intelligenz erfolgen.

Bei einer bevorzugten Variante des Verfahrens gemäß der Erfindung ist vorgesehen, dass eine automatische Auswahl eines Automatisierungsziels regelbasiert in Abhängigkeit von erfassten und oder gemessenen Betriebsgrößen aus dem Betrieb der Anlage erfolgt, die von dem Leitsystem an das Priorisierungssystem übergeben werden. Beispielsweise kann das Priorisierungssystem in Abhängigkeit der von der Level-1 Automation (und/oder Level-2 und/oder Level-3 und/oder High Level Control 4.0) erfassten gemessenen Betriebsgrößen des Prozesses automatisch die Produktqualität priorisieren.

Bei Betrieb einer Walzstraße als hüttentechnische Anlage können Betriebsgrößen beispielsweise sein:

- Level 0 Messwert für die Bandtemperatur

- Level 0 Messwert Biegekraft

- Level 0 Messwert Horizontalverschiebung der Walzen

- Level 0 Messwert Gerüst- und oder Bandgeschwindigkeit

- Level 0 Messwert Banddicke

- Level 0 Messwert Bandbreite

- Level 0 Messwert Temperatur des Walzmediums beispielsweise der Emulsion im Zulauf und oder im Rücklauf

- Level 0 Messwert Pumpendrehzahl

- Level 0 Messwert Strommessung

- Level 0 Messwert Drehmomentmessung

- Level 0 Messwert Walzkraftmessung

- Level 0 Messwert Voreilungsmessung

- Level 0 Volumenstrommessung des Walzmediums, beispielsweise Emulsion

- Level 0 Zugmessung, beispielsweise bedien- und oder antriebsseitig

- Level 0 Messung der Band und oder Bundtemperatur

- Level 0 Lautstärkemessung

- Level 1 Zusatzwerte auf Hauptantriebe aus einer Zugregelung

- Level 1 Zusatzwerte auf Hauptantriebe aus einer Dickenregelung

- Level 1 Zusatzwerte auf Hauptantriebe aus einer Lastumverteilung

- Level 1 Zusatzwerte auf Referenzdicke aus einer Lastumverteilung

- Level 1 Zusatzwerte auf hydraulische Gerüstanstellung aus einer Zugregelung

- Level 1 Zusatzwerte auf hydraulische Gerüstanstellung aus einer Dickenregelung

- Level 1 Zusatzwerte auf hydraulische Gerüstanstellung aus einer Dressiergradregelung

- Level 1 Zusatzwerte auf hydraulische Gerüstanstellung aus einer Walzen Exzentrizitätskompensation

- Level 1 Zusatzwerte auf hydraulische Gerüstanstellung aus einer Reibwertvorsteuerung (Vorsteuerung der Walzeffizienz als Funktion der Walzgeschwindigkeit)

- Level 1 Zusatzwerte auf hydraulische Gerüstanstellung aus manuellen Eingriffen

- Level 1 Zusatzwerte auf hydraulische Gerüstanstellung aus Funktionen für dicken Coil Kern

- Level 1 Zusatzwerte auf hydraulische Gerüstanstellung aus Start / Stopp Funktionen

- Level 1 Zusatzwerte auf hydraulische Gerüstanstellung aus einer Lastumverteilung

- Level 1 Zusatzwerte auf Walzkraft aus manuellen Eingriffen

- Level 1 Zusatzwerte auf Walzkraft aus Dressiergradregelungen

- Level 1 Zusatzwerte auf Antriebsmoment aus Vorsteuerungen

- Level 1 Zusatzwerte zur Kühlmenge (Kühlung kann sowohl eine für die Walzen bestimmte Einrichtung sein als auch eine Bandkühlung)

- Level 1 Vorgaben der Gesamtkühlmenge (Kühlung kann sowohl eine für die Walzen bestimmte Einrichtung als auch eine Bandkühlung sein)

- Level 1 Zusatzwerte zur Schmiermenge der Walzspaltschmierung

- Level 1 Vorgaben der Gesamtschmiermenge der Walzspaltschmierung

- Level 1 Zusatzwerte zum Kühldruck (Kühlung kann sowohl eine für die Walzen bestimmte Einrichtung als auch eine Bandkühlung sein)

- Level 1 Vorgaben der Gesamtkühldruck (Kühlung kann sowohl eine für die Walzen bestimmte Einrichtung als auch eine Bandkühlung sein)

- Level 1 Zusatzwerte zum Schmierdruck der Walzspaltschmierung

- Level 1 Vorgaben des Gesamtschmierdrucks der Walzspaltschmierung

- Level 1 Zusatzwerte zum Kühlsprühwinkel (Kühlung kann sowohl eine für die Walzen bestimmte Einrichtung als auch eine Bandkühlung sein)

- Level 1 Vorgaben der Gesamtkühlsprühwinkel (Kühlung kann sowohl eine für die Walzen bestimmte Einrichtung als auch eine Bandkühlung sein)

- Level 1 Zusatzwerte zum Schmiersprühwinkel der Walzspaltschmierung

- Level 1 Vorgaben der Gesamtschmiersprühwinkel der Walzspaltschmierung

- Level 1 Zusatzwerte aus manuellen Eingriffen für den Einlaufzug

- Level 1 Zusatzwerte aus manuellen Eingriffen für den Auslaufzug

- Level 1 Zusatzwerte aus manuellen Eingriffen für Zwischengerüstzug

- Level 1 Zusatzwerte aus Vorsteuerfunktionen für Einlaufzug

- Level 1 Zusatzwerte aus Vorsteuerfunktionen für Auslaufzug (z.B. Wickeln eines harten Coil Kerns)

- Level 1 Zusatzwerte aus Vorsteuerfunktionen für Zwischengerüstzug (Start Funktionen, strategische Zugänderungen)

- Level 1 Zusatzwerte aus Profilvorsteuerung für Walzenverschiebungen (Verschiebung der Arbeits- und/oder Zwischenwalze. Auf die zu verschiebende Walze wurde ein Konturschliff aufgebracht)

- Level 1 Zusatzwerte aus Planheitsregelung für Walzenverschiebungen (Verschiebung der Arbeits- und/oder Zwischenwalze. Auf die zu verschiebende Walze wurde ein Konturschliff aufgebracht)

- Level 1 Zusatzwerte aus manuellen Eingriffen für Walzenverschiebungen (Verschiebung der Arbeits- und/oder Zwischenwalze. Auf die zu verschiebende Walze wurde ein Konturschliff aufgebracht)

- Level 1 Zusatzwerte aus Vorsteuerfunktionen für Walzenverschiebungen (Verschiebung der Arbeits- und/oder Zwischenwalze. Auf die zu verschiebende Walze wurde ein Konturschliff aufgebracht)

- Level 1 Zusatzwerte auf Exzentereinrichtung für die Einstellung der Änderung der Walzspaltkontur

- Level 1 Zusatzwerte aus Planheitsregelung für Walzenbiegungen (Arbeits- und/oder Zwischenwalzen,

oder weitere)

- Level 1 Zusatzwerte aus manuellen Eingriffen für Walzenbiegungen (Arbeits- und oder Zwischenwalzen, oder weitere)

- Level 1 Zusatzwerte aus Vorsteuerfunktionen für Walzenbiegungen (Arbeits- und/oder Zwischenwalzen oder weitere)

- Level 1 Zusatzwerte aus Planheitsregelung für Differenzkraft und/oder Differenzpositionsanstellung der hydraulischen Anstellungen

- Level 1 Zusatzwerte aus manuellen Eingriffen für Differenzkraft und/oder Differenzpositionsanstellung der hydraulischen Anstellungen

- Level 1 Zusatzwerte aus Vorsteuerfunktionen für Differenzkraft und/oder Differenzpositionsanstellung der hydraulischen Anstellungen

- Level 1 Zusatzwerte aus einem Differenzzugregler für Differenzkraft und/oder einer Differenzpositionsanstellung der hydraulischen Anstellungen

- Level 1 Zusatzwerte aus einem Differenzkraftregler für Differenzkraft und/oder einer Differenzpositionsanstellung der hydraulischen Anstellungen

    - Level 1 Zusatzwerte zu Planheitssollkurven

- Level 1 Gesamtvorgabe zu Planheitssollkurven

- Level 2 Setzwerte (vgl. Definition Setzwerte, s.u. Zusätzlich sind im Folgenden bewusst weitere Level 2 Größen aufgeführt)

- Level 2 Einzelergebnisse, beispielsweise aus der thermischen Berechnung

- Level 2 Adaptionsschlüssel und oder Adaptionsergebnisse

- Level 2 Material- und oder Dimensionsklassifizierung

- Level 3 Vorgabewerte zu Art, Länge und Beschaffenheit von Defektstellen

- Level 3 Vorgabewerte zu Produktlimitierungen, beispielsweise Toleranzen beim Endkunden

- Level 3 Vorgabewerte zu Bandbeschaffenheit wie Bandmodul, Chemische Zusammensetzung und oder Bandfestigkeit

- Level 3 Vorgabewerte zu Banddimensionen, wie Einlaufbreite, Einlaufdicke

- Level 3 Vorgabewerte zu Gewicht und oder Länge eines Coils

- Level 3 Vorgabewerte zu Gewicht und oder Länge eines zu walzenden Teilbereiches

- Level 3 / Level 2 / Level 1 Angaben zum Coil Durchmesser des gewalzten Produktes und oder einer geschnittenen Fehlstelle, beispielsweise ein so genanntes Pup-Coil (Schrott Coil mit kleinem Durchmesser)

- Prozess- und oder Systemdaten und oder daraus erzeugte Trends aus Langzeitspeichern, beispielsweise aus Datenspeichern der Digitalisierung, Industrie 4.0

- Prozess- und oder Systemdaten und oder daraus erzeugte Trends aus Langzeitspeichern beispielsweise Level 0, Level 1, Level 2 und oder Level 3 Daten.

- Level 1 / Level 2 / Level 3 Walzendaten wie beispielsweise Typ und Material einer Walze und oder deren Oberflächeneigenschaften wie Rauheit und oder deren Dimension

- Industrie 4.0 Analyseergebnisse beispielsweise die Angabe eines üblichen Dickenfehlers in Abhängigkeit von Beschleunigungs- und oder Verzögerungsrate (als Höhe der Ist-Dickenschwankung um den vorgegebenen Zielwert); üblicher Dickenfehler bei konstant Fahrten für beispielsweise verschiedene Material und Geschwindigkeitsklassen (als Höhe der Ist-Dickenschwankung um den vorgegebenen Zielwert)

- Angaben zur aktuellen und oder erwarteten Art der Energieversorgung

- Angaben zu aktuellen und oder erwarteten Materialeigenschaften wie beispielsweise den Dimensionen, der Güte, der Streckgrenze und oder der chemischen Zusammensetzung

- Angaben zu den aktuellen und oder erwarteten Kosten der Energieversorgung

- Angaben zu den aktuellen und oder erwarteten Kosten des Anlagenmediums, beispielsweise der Emulsion.

- Höhe der geplanten Auslastung der Anlage als aktuelle Angabe und oder als mittel- und oder als langfristige Einordnung, Vorgaben können beispielsweise in indirekter Form über beispielsweise geplante Walz- und oder Stillstands Zeiten erfolgen

- Angaben zur Hallen und Außentemperatur

- Angaben und oder Rückmeldungen aus vorgelagerten und oder nachfolgenden Prozessschritten, beispielsweise im Fall der erfindungsgemäßen Anwendung in einem Kaltwalzwerk die Information über die Prozess- und oder Anlagenparameter zu einem nachfolgenden Glühprozess und oder Veredelung, Lackierung, Tiefziehwerke und oder Informationen über die Prozess- und oder Anlagenparameter des vorgelagerten Prozesses der Warm-Fertigstraße und oder der Ofenverarbeitung

- Angaben zu aktuellen und oder erwarteten Bedienermannschaft
Beispielsweise Statistische Ergebnisse bezüglich Qualität und Produktivität

- Anlagendaten
Beispielsweise die Verfügbarkeit vor Aggregaten und oder Messsystemen, der Wartungszustand zumindest einzelner Anlagenbereiche

- Halleninnentemperatur

- Art der Lagerung vor und oder nach dem erfindungsgemäß optimiert betriebenen Prozess
Beispielsweise Ort, Lufttemperatur, Kontaktfläche, Kontaktflächentemperatur, wird hängend oder stehend gelagert, auf dem Boden oder auf Coils

- Identifikationsnummern und oder Kennungen für Materialklassen, Coil Identifikation und oder Walzenidentifikation

Beispielsweise kann ebenso im Rahmen der Erfindung vorgesehen sein, dass der Benutzer manuell ein bestimmtes Automatisierungsziel oder einen Betriebsmodus vorgibt und diese Vorgabe von dem Priorisierungssystem aufgrund von unbedingt einzuhaltenden Qualitätskriterien für das Endprodukt übersteuert wird. Ebenso kann beispielsweise von dem Leitsystem erfasst bzw. erkannt werden, ob elektrische Energie zu einer Spitzenlastzeit oder zu einer Schwachlastzeit des Netzes bereitgestellt wird und daraufhin automatisch einen entsprechenden Betriebsmodus ansteuern, der dem Rechnung trägt. Üblicherweise ist elektrische Energie zu Schwachlastzeiten günstiger als zu Spitzenlastzeiten. Auch kann es im Hinblick auf eine aus Sicht des Netzbetreibers wünschenswerte Netzstabilität günstiger sein, einen erhöhten Energiebedarf der Anlage zu Schwachlastzeiten das Netzes zu decken.
Erfindungsgemäß ist vorgesehen, dass in dem Priorisierungssystem Befehlsgruppen für verschiedene Automatisierungsziele der Anlage erzeugt werden und/oder hinterlegt sind und dass die Befehlsgruppen jeweils Vorgaben und/oder Grenzwerte für die Setzwerte umfassen. Eine Befehlsgruppe im Sinne der Erfindung umfasst einen oder mehrere zu beeinflussende Arbeitsgrößen oder Parameter der Anlage, die sich auf einen oder verschiedene Anlagenteile und oder einen oder verschiedene Qualitätskriterien des Produkts auswirkt.
Setzwerte der Level-2 Automation können beispielsweise für eine Walzstrasse folgende sein:

- Level 2 Setzwerte der Referenzgeschwindigkeiten
- Level 2 Setzwerte der Referenzdicken
- Level 2 Setzwerte der Referenzwalzspalte
- Level 2 Setzwerte der Referenzanstellpositionen für die hydraulischen Anstellungen der Walzen
- Level 2 Setzwerte der Referenzwalzkräfte
- Level 2 Setzwerte der Antriebsmomente für die angetriebenen Walzen
- Level 2 Setzwerte der Voreilungsvorgaben
- Level 2 Setzwerte der Walzenverschiebung
- Level 2 Setzwerte der Biegesysteme
- Level 2 Setzwerte der Exzentereinstellung
- Level 2 Setzwerte der Differenzkraft
- Level 2 Setzwerte der Differenzpositionsanstellung
- Level 2 Setzwerte für Vielzonenkühlmuster
- Level 2 Setzwerte für Heizmuster einer Kantenerwärmung
- Level 2 Setzwerte für induktive Walzenerwärmung
- Level 2 Setzwerte zu Planheitssollkurven
- Level 2 Vorgabe des thermischen Ballens
- Level 2 / Level 3 Vorgabe der Beschleunigungsrate
- Level 2 / Level 3 Vorgabe der Zielwalzgeschwindigkeit
- Level 2 / Level 3 Vorgabe der Ein- und oder Ausfädelgeschwindigkeit
- Level 2 / Level 3 Vorgabe der Schnittgeschwindigkeit
- Level 2 / Level 3 Vorgabe der Geschwindigkeit zum Durchfahren von Defektstellen und Schweißnähten
- Level 2 Vorgabewerte zu Sensitivitäten, beispielsweise dBiegung/dBanddicke, dBiegung/dWalzkraft, dCVC/dC4, d/Biegung/dC2
- Level 2 Vorgabewerte zu Systemlimitierungen, beispielsweise Bandzuglimitierungen, Drehmomenten Grenzen, Anstellkraftgrenzen

Die vorstehende Aufzählung ist ebenfalls nur beispielsweise und nicht abschließend.
Für die Walzstraße, können Befehlsgruppen, die bei einem oder mehreren Automatisierungszielen bzw. Walzszenarien optimiert werden, beispielsweise die folgenden sein:

- Veränderung der Zieldicke des Metallbandes innerhalb der Toleranzgrenzen (auch situationsbezogen, beispielsweise bei einem Betriebsmodus mit dem Optimierungsziel im Hinblick auf die Qualität des Erzeugnisses während der Beschleunigungsphasen des Metallbandes, mit einem Sicherheitsfaktor)

- Anpassung der Ziel-Walzgeschwindigkeit
- Anpassung der Schnitt-/Produktwechsel-Walzgeschwindigkeit
- Anpassung der Ein- und Ausfädel-Walzgeschwindigkeit
- Veränderung der Beschleunigungsrate des Metallbandes
- schnelle Ein- und Ausfädelsequenzen des Metallbandes, beispielsweise nicht im Hinblick auf die Abmaßlänge optimiert
- Anpassung der Werte für die Ziel-Banddicke in verschiedenen Walzphasen
- Anpassung der Ziel-Bandplanheit in verschiedenen Walzphasen
- Anpassung des Ziel-Bandprofils in verschiedenen Walzphasen
- Anpassung der Vorgabewerte für den Bandzug
- Stilllegung und Freigabe der Anlage
- Vorgabe der für einen Walzenwechsel vorgesehenen Zeiten
- Vorgabe des Anstich-Modus (hinsichtlich Abmaß optimiert/hinsichtlich Durchsatz optimiert)
- Anpassung der Umschaltpunkte für eine Zielwertänderung
- Anpassung der Rampenlängen für Zielwertänderungen und Produktwechsel
- Anpassung der Dimensionsvorgaben für das Einlaufmaterial
- Anpassung der Emulsions-Walzölmengen/Anpassung der Temperatur/Anpassung des Drucks des Schmier-und/oder Kühlmediums, beispielsweise Emulsion und/oder Walzöl
- Vorgabe der Aufwärmzeiten für die Gerüste
- Strategievorgaben, ab welcher Höhe eines neuen Setzwertes ein CVC *(continious variable crown)* Walzenpaar verschoben werden muss (unter CVC werden Walzen mit kontinuierlich veränderbarer Balligkeit bzw. Arbeitswalzen für das Kaltwalzen von Flachprodukten bezeichnet, die einen leichten, optisch nicht wahrnehmbaren S-förmigen Schliff erhalten und während des Walzprozesses axial gegeneinander verschiebbar sind. Ziel dieser Technik ist es, über die Bandbreite eine konstante Banddicke zu erzielen)
- Verhalten beim Walzen von Defekten und Schweißnähten (wird angehalten? welche Geschwindigkeit wird zum Durchfahren gewählt? wird die Zieldicke für eine sichere Fahrweise erhöht? etc.
- Vorgabe der Walzenrauheit

  - Vorgabe des Schliffes mindestens einer Walze

  - Strategievorgaben, ab welcher Höhe ein Walzenpaar in axialer Richtung verschoben werden kann, das einen Konturschliff beliebiger Ausprägung aufweist

  - Anpassung der Vorgabewerte zur Verschiebung eines oder mehrerer Walzenpaare in axialer Richtung, das einen Konturschliff beliebiger Ausprägung aufweist

- Vorgabe zum Aktivieren und Deaktivierung von Steuerungs- und oder Regelungssignalen

- Nutzung oder zumindest teilweise Abschwächung von Korrektursignalen aus Regelungsund oder Steuerungssystemen

- Zeitweise Abschwächung der Dynamik verschiedener Stellgrößen wie beispielsweise Biegedynamik, Dynamik der Planheitsregelung, Dynamik der Zylinderanstellung, Antriebsdynamik

- Aktive Ansteuerung verschiedener Systeme in einem bevorzugt lagerschonenden Bereich, wie beispielsweise eine Arbeitswalzenbiegung, die mit einem im Gegenzug leicht verschlechterten Planheitsergebnis einen Biegebereich vermeidet, der besonders verschleißintensiv für beispielsweise die Lagerung ist

- Vorgabe von Größe und Position eines lagerschonenden Bereiches für beispielsweise die Biegesysteme, die Kombination aus Bandzug und Antriebsdrehmoment und Walzmoment, die Antriebsbeschleunigung

- Zumindest zeitweises und oder Situationsbedingtes Erhöhen und oder Verringern der Regler Dynamik einer Banddickenregelung

- Zumindest zeitweises und oder Situationsbedingtes Erhöhen und oder Verringern der Regler Dynamik einer Bandbreitenregelung

- Zumindest zeitweises und oder Situationsbedingtes Erhöhen und oder Verringern der Regler Dynamik einer Bandprofilregelung

- Zumindest zeitweises und oder Situationsbedingtes Erhöhen und oder Verringern der Regler Dynamik einer Walzspaltprofilregelung

- Zumindest zeitweises und oder Situationsbedingtes Erhöhen und oder Verringern der Regler Dynamik einer Planheitsregelung

- Zumindest zeitweises und oder Situationsbedingtes Erhöhen und oder Verringern der Regler Dynamik einer Bandzugregelung

- Zumindest zeitweises und oder situationsbedingtes Erhöhen und oder Verringern der Vorgabe der Horizontalverschiebung zur Veränderung der Walzspaltkontur

- Zumindest zeitweise und oder situationsbedingte Limitierung von Arbeitsgrößen

- Vorgabe des Ausfädelmodus (hinsichtlich Abmaß optimiert / hinsichtlich Durchsatz optimiert)

- Vorgabe der Betriebstemperatur von Kantenerwärmungen

- Vorgabe der Zieltemperatur des Walzproduktes

- Vorgabe der Dauer von Walzenaufwärmzeiten beispielsweise unter Nutzung eines Aufwärmmodus ohne Band

- Zumindest zeitweise Limitierung von Stellgliedern Hydraulische Anstellung, Walzenbiegung, Walzenverschiebung, Walzenkühlung, so dass die Stellglieder nicht den vollen Regelhub anfahren können

- Vorgabe einer Geschwindigkeit und oder Position, ab der der Dickenwechsel im Band vorgenommen wird

- Vorgabe der Rampenlänge die angefahren wird, um von einer Ziel-Banddicke in die nächste Ziel-Banddicke zu fahren

- Vorgabe von Walzenwechseln

- Vorgabe zum Betreiben einzelner Aggregate wie Abblasungseinrichtungen, Zwischengerüstkühlungen und oder Kameras

Die vorstehende Aufzählung ist ebenfalls nur beispielhaft und nicht abschließend. Die genannten Befehlsgruppen können auch jeweils mehrfach vorkommen, beispielsweise einmal für jedes übergeordnete Automatisierungsziel.

Das erfindungsgemäße Verfahrens zeichnet sich dadurch aus, dass das Priorisierungssystem eine Auswahlebene und eine Zuordnungsebene als Automatisierungsebenen umfasst, dass in der Auswahlebene das Optimierungsziel festgelegt wird und dass in der Zuordnungsebene aufgrund von und/oder unter Verwendung von durch das Leitsystem erfassten Arbeitsgrößen aus dem Betrieb der Anlage Befehlsgruppen an das Leitsystem übergeben werden

Vorzugsweise werden die durch das Leitsystem erfassten Arbeitsgrößen aus dem Betrieb der Anlage sowohl an die Auswahlebene als auch an die Zuordnungsebene übergeben.

Die Befehlsgruppen werden über ein Expertensystem und/oder unter Zuhilfenahme künstlicher Intelligenz erzeugt und entsprechend der in der Auswahlebene erfolgten Priorisierung ausgewählt sowie an das Leitsystem übergeben.

Als Automatisierungsziele verschiedene Walzszenarien vorgesehen, die sich hinsichtlich ihrer Energieeffizienz unterscheiden. Mit der Einrichtung verschiedener Walzszenarien hat der Betreiber der Anlage im Gegensatz zu den bisher bekannten Automatisierungsverfahren die zusätzliche Möglichkeit, das Anlagenverhalten gemäß seiner aktuellen Anforderungen zu beeinflussen. Weiterhin können mit dem erfindungsgemäßen Ansatz überlagerte Regeln und oder lernende Systeme Anwendung finden, die eine intelligente Fahrweise der verschiedenen Walzszenarien automatisch ansteuern.

Bei einer vorteilhaften Variante des Verfahrens gemäß der Erfindung ist vorgesehen, dass die Automatisierungsziele ausgewählt werden aus einer Gruppe von Automatisierungszielen umfassend einen Energiesparmodus, einen Effizienzmodus, einen Hochleistungsmodus, einen Modus mit optimiertem (verringertem) Anlagenverschleiß, der beispielsweise auf eine erhöhte Lebensdauer der Walzen ausgelegt ist, einen Modus mit verringerter Abmaßlänge, einen Inbetriebnahme Modus, einen Aufwärmmodus, einen hinsichtlich der $CO_2$-Emissionen der Anlage optimierten Betriebsmodus, verschiedene Ein- und/oder Ausfädelmodi und einen Qualitätsmodus.

Weitere Automatisierungsziele können beispielsweise folgende sein:

- Eco Modus
  bevorzugtes Betreiben einer oder mehrerer Anlagen im ökonomisch optimierten Betrieb
- Power Modus
  bevorzugtes Betreiben einer oder mehrerer Anlagen im durchsatzoptimierten Betrieb
- Hohe Qualität
  bevorzugtes Betreiben einer oder mehrerer Anlagen im qualitätsoptimierten Betrieb, beispielsweise mit verbesserter Produktqualität in den Bereichen Bandbreite, Banddicke, Bandprofil und oder Bandplanheit
- Reduzierte Qualitätsanforderungen
  mögliches Betreiben einer oder mehrerer Anlagen im Betrieb mit reduzierter Qualität, beispielsweise mit hoher Produktqualität in den Bereichen Bandbreite, Banddicke, Bandprofil und oder Bandplanheit
- Lebensdaueroptimiert für die Anlagenausrüstung
  bevorzugtes Betreiben einer oder mehrerer Anlagen in einem für die Anlage schonenden Betrieb, beispielsweise zur Erhöhung der Lebensdauer der Walzen und oder der Walzenlage
- Maximale Produktivität
  Betreiben der Anlage mit maximaler Produktivität
- Minimale Produktivität
  Betreiben der Anlage mit minimaler Produktivität
- Abmaßlängenreduziert
  bevorzugtes Betreiben einer oder mehrerer Anlagen in einem in Bezug auf die Abmaßlänge optimierten Betrieb, beispielsweise mit verbesserter Abmaßlänge in den Bereichen Bandbreite, Banddicke, Bandprofil, Bandtemperatur und oder Bandplanheit

- Stromkostenoptimiert
bevorzugtes Betreiben einer oder mehrerer Anlagen im Stromkosten optimierten Betrieb
- Gaskostenoptimiert
bevorzugtes Betreiben einer oder mehrerer Anlagen im Gaskosten optimierten Betrieb
- Energiekostenoptimiert
bevorzugtes Betreiben einer oder mehrerer Anlagen im Energiekosten optimierten Betrieb
- $CO_2$ optimiert
bevorzugtes Betreiben einer oder mehrerer Anlagen im optimierten Betrieb hinsichtlich der $CO_2$ Emissionen, beispielsweise definiert als $CO_2$ Ausstoß pro Tonne Walzgut
- Gewinnoptimiert
bevorzugtes Betreiben einer oder mehrerer Anlagen im optimierten Betrieb im Hinblick auf die monetären Ziele
- Inbetriebnahme Modus
bevorzugtes Betreiben einer oder mehrerer Anlagen im Inbetriebnahme Betrieb, beispielsweise zugeschnitten auf verschiedene Optimierungsphasen einer Inbetriebnahme
- Temperaturmodus Anlage
bevorzugtes Betreiben einer oder mehrerer Anlagen im temperaturoptimierten Betrieb, beispielsweise können die Aufwärmphasen einer Anlage sowie Temperatursteuerungen der Lagerungen optimiert betrieben werden,
- High Performance
bevorzugtes Betreiben einer oder mehrerer Anlagen im performanceoptimierten Betrieb, beispielsweise zur Optimierung des Durchsatzes abhängig von der Verkaufsstrategie a) Bandmeter oder b) Bandtonnen
- Dauer Modus
Betreiben der Anlage in möglichst konstantem Lastbetrieb

Die verschiedenen Betriebsmodi bzw. übergeordneten Automatisierungsziele können auch kombiniert und priorisiert betrieben werden, beispielsweise so, dass zumindest zeitweise mindestens zwei Automatisierungsziele gleichzeitig verfolgt werden.

Eine automatische Auswahl des Automatisierungsziels kann beispielsweise in Abhängigkeit der Auslastung des die Spannungsversorgung der Anlage bereitstellenden Stromversorgungsnetzes erfolgen.

Die Erfindung wird nachstehend unter Bezugnahme auf und anhand eines in den Zeichnungen dargestellten Ausführungsbeispiels erläutert.

Es zeigen:

Figur 1 ein Blockschaltbild welches das Priorisierungssystem gemäß der Erfindung und dessen Beziehung zu dem Leitsystem veranschaulicht,

Figur 2 ein detailliertes Blockschaltbild der Auswahlebene und der Zuordnungsebene des Priorisierungssystems und

Figur 3 ein Beispiel der Übergabe von Steuerungsvorgaben bzw. Optimierungsvorgaben von dem Priorisierungssystem an ein hüttentechnisches Leitsystem in Form einer Walzstraße.

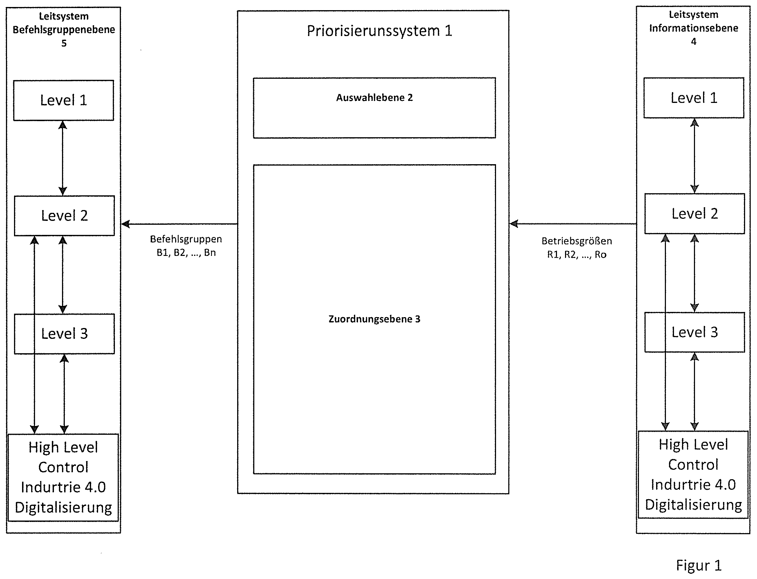

In Figur 1 ist schematisch der Ablauf einer automatischen Auswahl eines vorgegebenen Automatisierungsziels für die Steuerung und Regelung einer Walzstraße mit einer Vielzahl von Walzgerüsten veranschaulicht. Das Priorisierungssystem 1 gemäß der Erfindung umfasst eine Auswahlebene 2 und eine Zuordnungsebene 3. Das Priorisierungssystem 1 ist einem mehrstufigen Leitsystem übergeordnet, von dem in der Zeichnung zwei Ebenen veranschaulicht sind, nämlich eine Informationsebene 4 für verschiedene Walzszenarien und eine Befehlsgruppenebene 5 für verschiedene Walzszenarien. Über die Informationsebene 4 des Leitsystems werden der Auswahlebene 2 des Priorisierungssystems 1 Arbeitsgrößen bzw. Betriebsgrößen des Walzprozesses bereitgestellt, die als Informationen sowohl für die Anwahl eines Automatisierungsziels bzw. eines Walzszenarios als auch für die Quellenauswahl zur Walzszenarienselektion/Priorisierung verwendet werden können. Als Quellen zur Auswahl eines Automatisierungsziels sind manuelle Eingaben, regelbasierte Eingaben, die Eingabe über ein Expertensystem oder die Eingabe mithilfe von künstlicher Intelligenz zugelassen. Die Anwahl kann über nur eine Auswahlquelle oder auch über Kombinationen dieser Auswahlquellen erfolgen.

In dem dargestellten Programmablauf wird beispielsweise in der Auswahlebene 2 ein vorgewähltes kombiniertes Walzszenario bereitgestellt, das einem energieoptimierten bzw. hinsichtlich der $CO_2$-Emissionen optimierten Automatisierungsziel entspricht. Über die Informationsebene 4 des Leitsystems werden der Auswahlebene 2 des Priorisierungssystems 1 beispielsweise Informationen über die Art der Energieversorgung der Anlage bereitgestellt. Solche Informationen können beispielsweise sein, ob die derzeitige Spannungsversorgung aus regenerativen Energiequellen kommt oder ob gerade Schwachlaststrom oder Spitzenlaststrom zur Verfügung gestellt wird. Nun kann beispielsweise die Walzstraße bevorzugt betrieben werden oder höher belastet werden, wenn die Stromversorgung beispielsweise aus regenerativen Energien stammt. Auch könnte der Benutzer die Herstellung eines Coils abrufen, welches beispielsweise Energieoptimiert oder $CO_2$ - optimiert hergestellt wurde.

Über die in der Auswahlebene 2 getroffene Auswahl werden die entsprechenden Befehlsgruppen zur entsprechenden Weitergabe an die Befehlsgruppenebene 5 des Leitsystems erzeugt und/oder definiert. Die Befehlsgruppenerzeugung bzw. deren Definition kann beispielsweise ebenfalls manuell und oder regelbasiert und oder gestützt durch ein Expertensystem und/oder mithilfe von künstlicher Intelligenz erfolgen. Die Befehlsgruppen werden an die Level-1 und/oder die Level-2 Automation der Befehlsgruppenebene 5 übergeben.

Die Befehlsgruppen bewirken beispielsweise für das Level-2 System Erhöhen und /oder Verringern von Zielwerten über die Vorgabe der Befehlsgruppen B. Nach Empfang der neuen Zielwerte in Form von Befehlsgruppen B berechnet die Level-2 Automation einen neuen Stichplan und damit angepasste Setzwerte, die an das Level-1 System weitergeleitet werden können. Nun meldet das Level-2 System dem Priorisierungssystem 1 optional die erfolgreiche Nachberechnung über eine oder mehrere Betriebsgrößen R aus der Informationsebene des Leitsystems 4 zurück. Ist eine Nachberechnung des Level-2 Systems, die unter Berücksichtigung mindestens einer Befehlsgruppe durchgeführt wurde, nicht erfolgreich, wird dies optional über die Betriebsgrößen R der Informationsebene des Leitsystems 4 dem Priorisierungssystem 1 zurückgemeldet.

In dem Fall einer nicht erfolgreichen Level-2 Berechnung unter Berücksichtigung mindestens einer Befehlsgruppe B des Priorisierungssystems 1, beispielsweise weil bestimmte Anlagenlimitierungen erreicht sind, kann die Befehlsgruppe B, im Fall einer regelbasierten und oder manuellen Vorgabe, vom Level-2 System verworfen und eine Berechnung mit ursprünglich vorgegebenen Zielwerten durchgeführt werden. Alternativ zum Verwerfen der Befehlsgruppe B kann das Level-2 System beispielsweise iterativ nach Lösungswerten für eine erfolgreiche Berechnung suchen. Diese Lösungswerte liegen erfindungsgemäß bevorzugt zwischen dem ursprünglich geplanten Wert vor Absetzen der Befehlsgruppe und dem durch die Befehlsgruppe B veränderten Wert. Für den Fall der Nutzung eines Expertensystems und oder von künstlicher Intelligenz innerhalb der Zuordnungsebene 3 des Priorisierungssystems 1, kann das Priorisierungssystem 1 aufgrund der von der Informationsebene 4 zurückgemeldeten Betriebsgröße R optional aktiv einen oder mehrere Korrekturvorschläge senden, mit denen die Level-2 Berechnung erneut durchgeführt wird. Diese Korrektur kann beispielsweise durch iterative Änderungen der Befehlsgruppen B im Priorisierungssystem 1 erfolgen.

Befehlsgruppen B, die direkt an das Level 1 System der Befehlsgruppenebene des Leitsystems 5 gesendet werden, können zusätzlich zu einer optionalen Zielgrößenanpassung und oder Parameterumschaltung verschiedene Systeme aktivieren und oder deaktivieren. Auch können Limitierungen, Verstärkungen von Regelsystemen und/oder Vorgaben zu Rampensteilheiten und/oder Größen zur dynamischen Aktivierung von Funktionen und/oder Regelsystemen über Befehlsgruppen B vorgegeben werden.

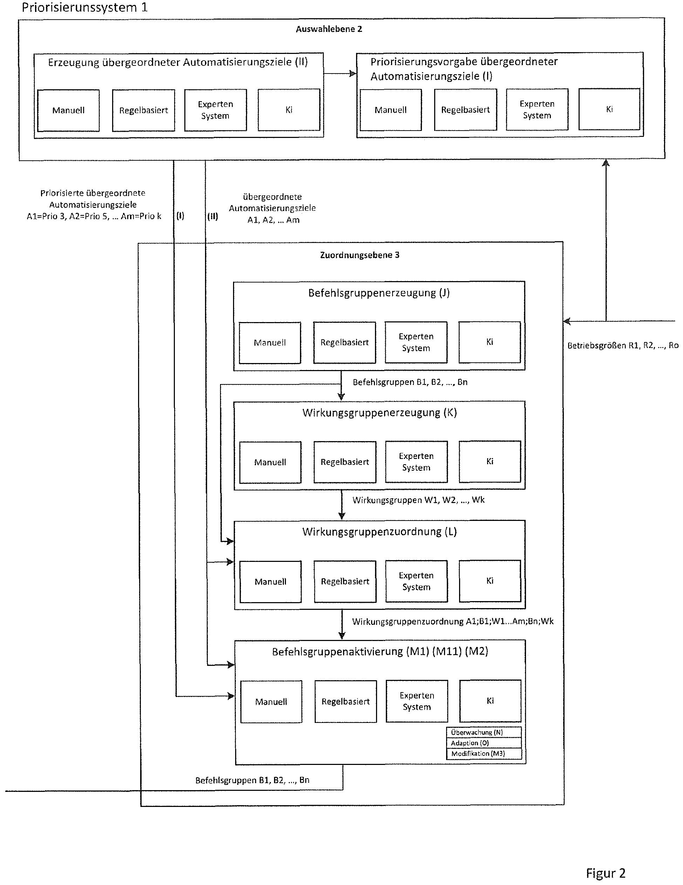

In Figur 2 ist die Funktionsweise des Priorisierungssystems im Detail dargestellt. Die Auswahlebene 2 des Priorisierungssystems teilt sich in zwei Arbeitsbereiche auf, die Erzeugung übergeordneter Automatisierungsziele (II) und die Priorisierung übergeordneter Automatisierungsziele (I).

Die Erzeugung übergeordneter Automatisierungsziele (II) erfolgt manuell, regelbasiert, durch Expertensysteme und oder über künstliche Intelligenz. Wird erfindungsgemäß mindestens ein übergeordnetes Automatisierungsziel erzeugt, wird dieses zu dem System der Priorisierungsvorgabe übergeordneter Automatisierungsziele (I) gesendet, wo abhängig von manuellen Angaben, regelbasiert, über Expertensysteme und/oder über künstliche Intelligenz eine Priorisierung aller erzeugten Automatisierungsziele A vorgegeben wird.

Die Ergebnisse aus diesen Systemen (II) und oder (I), also die übergeordneten Automatisierungsziele A und deren Priorisierung An =Priorität k werden nun an die Zuordnungsebene 3 weitergeleitet.

In der Auswahlebene 2 werden Priorisierungen gemäß der übergeordneten Automatisierungsziele A erzeugt. Diese übergeordneten Automatisierungsziele A können erfindungsgemäß beispielsweise vom Bediener manuell eingegeben werden. Beispielsweise wird die Anlage dann bevorzugt in einem Schonmodus betrieben, wenn ein Walzenwechsel herausgezögert werden muss. Auch kann erfindungsgemäß die Priorisierungsvorgabe übergeordneter Automatisierungsziele (I) über Regelwerke erfolgen. Beispielsweise bestellt ein Endkunde ein grünes Coil oder die Stromeinspeisung befindet sich in einer Hochlastphase, dann kann die Anlage automatisch in einem ECO Modus als übergeordnetes Automatisierungsziel A mit der Priorität 1 betrieben werden.

Eine weitere bevorzugte erfindungsgemäße Ausführungsform des Verfahrens sieht die Erzeugung der übergeordneten Automatisierungsziele A durch Expertensysteme und oder durch künstliche Intelligenz über die Erzeugung übergeordneter Automatisierungsziele (II) der Auswahlebene 2 des Priorisierungssystems 1 vor. Hierbei kann eine Randbedingung oder eine Vielzahl von Randbedingungen basierend auf den Betriebsgrößen R berücksichtigt werden.

Beispielsweise können folgende Ziele verfolgt werden:

- Optimierung der Gesamtauslastung basierend auf einer anlagenübergreifenden, übergeordneten Betrachtung.
- Optimierte Walzenwechselplanung abhängig von aktuellen Kapazitäten der Walzenschleiferei.
- Optimiertes Betreiben der Anlage unter Berücksichtigung der aktuellen Preisentwicklung des Walzmediums.

Durch diese erfindungsgemäße Nutzung des Priorisierungssystems 1 und der Auswahlebene 2 können zusätzlich zu dem optimierten Betreiben der Anlagen auch übergeordnete Tests und Analyseprozesse durchgeführt werden, wie beispielsweise ein standortübergreifender Qualitätsvergleich.

Die Befehlsgruppen können manuell, regelbasiert, durch Expertensysteme und oder durch KI-Systeme über die Befehlsgruppenerzeugung (J) aus Figur 2 vorgegeben werden.

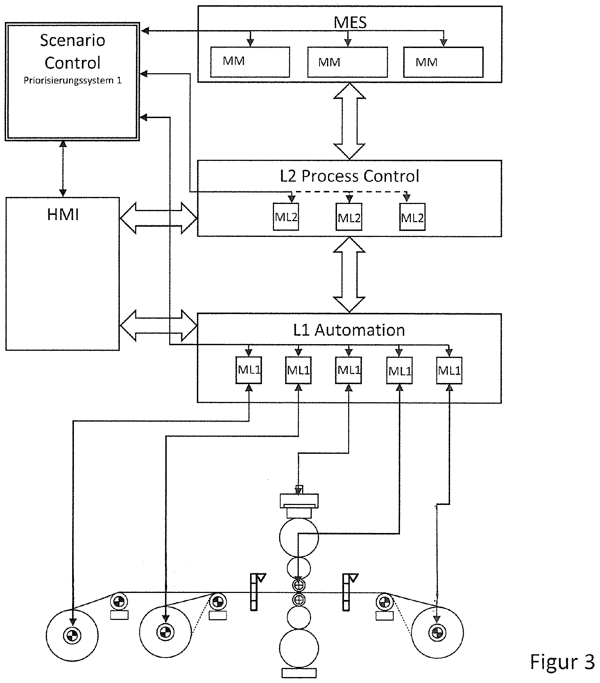

Die Figur 3 zeigt beispielhaft die Einbindung der erfindungsgemäßen Vorgaben szenenbasierter Automatisierungsziele in ein hüttentechnisches Leitsystem.

Das dargestellte Leitsystem besteht aus mehreren Ebenen, einer übergeordneten Produktionsplanung, bezeichnet als MES System, einem Setzwertrechner, bezeichnet als Level-2 System, einem System zur Durchführung von für Steuerungs- und Regelungsaufgaben, bezeichnet als Level-1 System sowie einer Anlagenvisualisierung, bezeichnet als HMI System. Das dargestellte Leitsystem ist über Sensoren und Aktoren mit der Anlage gekoppelt.

Das erfindungsgemäße Priorisierungssystem 1, in Figur 3 bezeichnet mit "Szenario Control", umfasst die zuvor beschriebene Auswahlebene 2 und die Zuordnungsebene 3.

Für das übergeordnete Priorisierungssystem 1 ist vorgesehen, Daten mit einer oder mehreren Ebenen des Leitsystems der Prozessautomation auszutauschen. Der Datenaustausch beinhaltet sowohl den Empfang der Betriebsgrößen R, die aus dem Leitsystem an das Priorisierungssystem 1 gesendet werden, als auch das Absetzen der Befehlsgruppen B aus dem Priorisierungssystem 1 an das Leitsystem.

Das Level 1 System des Leitsystems umfasst eine direkte Kommunikationsverbindung mit der Anlage, also der Sensorik und der Aktorik.

Gibt das Priorisierungssystem 1 eine Befehlsgruppe B an das Level-2 System ab, können dadurch die vom Level-2 System an das Level-1 System gesendeten Vorgaben angepasst werden, was weiterhin Auswirkungen auf die Ansteuerung der Aktoren der Anlage durch das Level-1 System hat. Über die installierte Sensorik können die Auswirkungen der abgesetzten Befehlsgruppe B über Messwerte aus dem Prozess erfasst werden. Diese direkt gemessenen Betriebsgrößen R und oder vom Leitsystem aufbereitete Betriebsgrößen R werden an das Priorisierungssystem 1 gesendet.

Der Datenaustausch von Befehlsgruppen B und oder Betriebsgrößen R kann zumindest zeitweise zwischen allen Ebenen des Leitsystems und oder zwischen einzelnen Ebenen des Leitsystems und dem Priorisierungssystem 1 erfolgen.

Sowohl das Leitsystem als auch das Priorisierungssystem 1 können mit einer Anlagenvisualisierung, einem so genannten HMI System verbunden sein. Diese Verbindung ermöglicht manuelle Vorgaben an das Priorisierungssystem 1 über das HMI System.

Manuelle Vorgaben können beispielsweise sein: Befehlsgruppen, Wirkungsgruppen, Wirkungsgruppenzuordnung, Automatisierungsziele und oder die Priorisierung von Automatisierungszielen.

Zusätzlich zu der Möglichkeit der manuellen Eingabe können Größen des Leitsystems und oder des Priorisierungssystems 1 in dem HMI System angezeigt werden. Im HMI System angezeigte Größen des Priorisierungssystems 1 können beispielsweise Automatisierungsziele A, Befehlsgruppen B und oder Wirkungsgruppen W sein.

Wirkungsgruppen W beziehen sich auf die Auswirkungen einer abgesetzten Befehlsgruppe B. Jede Befehlsgruppe B kann einer Wirkungsgruppe oder mehreren Wirkungsgruppen W zugeordnet sein. Diese genannten Wirkungsgruppen W können auch jeweils mehrfach vorkommen, z.B. einmal für jede Befehlsgruppe B. Wirkungsgruppen können beispielsweise sein:

- Verringerung der Walzdauer durch Erhöhung der Zieldicke

    ◦ Fall a1) Erhöhung der Produktivität bei Verkauf pro Tonne

    ◦ Fall b1) Verringerung der Produktivität bei Verkauf pro Bandmeter

- Reduzierung der $CO_2$ Last

- Reduzierter Energiebedarf pro gewalzter Tonne

- Energieersparnis durch Verringerung der Abnahme und damit der Walzleistung

- Schonung der Anlage durch eine geringere Belastung der Gerüste und der Antriebsstränge

- Erhöhung der Dickenabweichung bei Konstantfahrten

- Erhöhung der Dickenabweichung bei Anlagenbeschleunigung

- Erhöhung der Dickenabweichung bei Anlagenverzögerung

- Verringerung des Durchsatzes

- Erhöhung des Durchsatzes

- Stichplanabhängig, Fall a2) Verbesserung der Anlageneffizienz

    ◦ Reduzierung der $CO_2$ Last

    ◦ Reduzierter Energiebedarf

- Stichplanabhängig, Fall b2) Verschlechterung der Anlageneffizienz

    ◦ Erhöhte $CO_2$ Last

    ◦ Erhöhter Energiebedarf

- Fall a3) Erhöhen der Abmaß länge bei hochfesten Güten

- Fall b3) Keine Auswirkungen auf Abmaß länge

- Fall a4) Verbesserung der Dicken- und oder Planheitsqualität

- Fall b4) Verschlechterung der Dicken- und oder Planheitsqualität

- Erhöhte Sicherheit Durchfahren von Defekten, Schweißnähten, etc.

- Verringerte Sicherheit Durchfahren von Defekten, Schweißnähten, etc.

- Verringerung der Anlagenkosten pro gewalzter Tonne

- Stichplanabhängig, Fall a5) Verbesserung der Anlageneffizienz

  ◦ Reduzierung der $CO_2$ Last

  ◦ Reduzierter Energiebedarf

- Stichplanabhängig, Fall b5) Verschlechterung der Anlageneffizienz

  ◦ Erhöhte $CO_2$ Last

  ◦ Erhöhter Energiebedarf

- Riskantes Durchfahren von Defekten, Schweißnähten, etc.

- Geringere Maximale Walzgeschwindigkeit möglich

- Geringerer Verbrauch der Medienpumpen

- Geringerer Verschleiß der Bedienpumpen

- Reduzierter Verschleiß von Anlagenteilen, beispielsweise der Walzenoberfläche und oder der Einbaustücke der Biegesysteme

- Zumindest zeitweise verschlechterte Bandplanheit

- Zumindest zeitweise verbesserte Bandplanheit

- Zumindest zeitweise verschlechterter Bandzug

- Zumindest zeitweise verbesserter Bandzug

- Zumindest zeitweise verschlechterte Banddicke

- Zumindest zeitweise verbesserte Banddicke

- Zumindest zeitweise verschlechterte Bandrauheit

- Zumindest zeitweise verbesserte Bandrauheit

- Zumindest zeitweise verschlechterte Bandtemperatur

- Zumindest zeitweise verbesserte Bandtemperatur

- Zumindest zeitweise verschlechterte Bandsauberkeit

- Zumindest zeitweise verbesserte Bandsauberkeit

- Zumindest zeitweise verschlechtertes Bandprofil

- Zumindest zeitweise verbessertes Bandprofil

- Zumindest zeitweise verschlechterte Bandbreite

- Zumindest zeitweise verbesserte Bandbreite

- Zumindest zeitweise verschlechterter Bandzug

- Zumindest zeitweise verbesserter Bandzug

- Erhöhter Verschleiß zumindest einer Walze

- Verringerter Verschleiß zumindest einer Walze

- Verschleißintensiver

- Schonender Betrieb der Anlage

- Reduzierung des Haspelschlages

- Erhöhung des Haspelschlages

- Verringerung der Lautstärke der Anlage

- Vorgabe eines Automatisierungszieles A

Befehlsgruppen des Priorisierungssystems 1 werden vorzugsweise an Module gesendet. Diese Module sind in der Figur 2 im Leitsystem für die Ebene Level 1 mit der Kennung ML1 bezeichnet. Module in der Level 1 Ebene können beispielsweise Einzel- und oder Gruppenfunktionen sein.

Weitere Module sind im Leitsystem für die Ebene Level 2 mit der Kennung ML2 bezeichnet. Module in der Level 2 Ebene können beispielsweise Prozessmodule sein.

Weitere Module sind im Leitsystem für die Ebene MES mit der Kennung MM bezeichnet. Module in der MES Ebene können beispielsweise Planungsmodule sein.

Die Wirkgruppenzuordnung (L) beschreibt die Zuordnung der Befehlsgruppen B und der Wirkungsgruppen W zu einem vorgegebenen Automatisierungsziel A.

Diese genannten Wirkungsgruppenzuordnungen aus Modul (L) in Figur 2 können auch jeweils mehrfach vorkommen, z.B. einmal für jedes übergeordnete Automatisierungsziel (A) und oder für jede Befehlsgruppe B und oder für jede Wirkungsgruppe W. Wirkungsgruppenzuordnungen können beispielsweise sein:

(V) = vorteilhaft
(N) = nachteilig
(n) = neutral
(V)(Z) = vorteilhaft, gewichtet
(N)(Z) = nachteilig, gewichtet

Beispielsweise gegeben ist ein übergeordnetes Automatisierungsziel A1 und ein zweites übergeordnetes Automatisierungsziel A2, vorgegeben über die Erzeugung der Automatisierungsziele (II).

Weiterhin wird eine erste Befehlsgruppe B1 und eine zweite Befehlsgruppe B2 über die Befehlsgruppenerzeugung (J) vorgegeben.

Weiterhin wird eine Wirkungsgruppe W1 und eine zweite Wirkungsgruppe W2 über die Wirkungsgruppenerzeugung (K) vorgegeben.

Eine einfachste Form der erfindungsgemäßen Wirkungsgruppenzuordnung ist eine Zuordnung, gemessen am vorgegebenen Automatisierungsziel A1, A2, in (V) für eine vorteilhafte Auswirkung, in (N) für eine nachteilige Auswirkung und oder in (n) für eine bezüglich dem übergeordneten Automatisierungsziel als neutral anzusehende Auswirkung der Befehlsgruppe.

Somit könnten beispielsweise die folgenden Zuordnungen gesetzt werden.

$$A1, B1, W1 = (V)$$

$$A1, B2, W1 = (N)$$

$$A1, B2, W2 = (n)$$

$$A2, B1, W1 = (N)$$

$$A2, B2, W1 = (n)$$

$$A2, B2, W2 = (V)$$

In einer weiteren erfindungsgemäß bevorzugten Ausführungsform des Verfahrens können bei den Wirkungsgruppenzuordnungen (L) zusätzlich Gewichtungskriterien (Z) eingeführt werden. Dies kann manuell, regelbasiert, über Expertensysteme und oder unter Verwendung von künstlicher Intelligenz erfolgen.

Gewichtungskriterien (Z) können in der einfachsten Form Faktoren sein, mit denen eine Wirkungsgruppe W für ein bestimmtes übergeordnetes Automatisierungsziel A als beispielsweise besonders vorteilhaft oder nur als leicht vorteilhaft eingestuft wird.

In einer weiteren erfindungsgemäß bevorzugten Ausführungsform des Verfahrens können Gewichtungskriterien (Z) basierend auf Betriebsgrößen R zumindest zeitweise verändert werden. Somit können für unterschiedliche Anlagenzustände, Walzmodi, Stichpläne und oder sonstige veränderte Randbedingungen die Erfüllung der übergeordneten Automatisierungsziele optimal an die jeweils vorliegende Situation angepasst werden. Die Ergebnisse der Wirkungsgruppenzuordnungen (L) und oder der Gewichtungskriterien (Z) bilden die Basisinformation für die Entscheidung, ob eine oder mehrere Befehlsgruppen abgesetzt werden. Also werden die Größen (L), (Z), (I) und oder (II) dem Modul zur Befehlsgruppenaktivierung (M1) (M11) zugeführt.

Ein konkretes Anwendungsbeispiel für das Automatisierungsziel "Maximale Produktivität" an einer Warmstraße kann folgende Schritte umfassen: Befehlsgruppenansteuerung:

1. Setzen eines hohen Volumens für Versorgungssysteme, beispielsweise Druckluft und Kühlmedien

2. Zulassen eines niedrigen Limits der Ofen Auslauftemperatur

3. Zulassen der maximalen Beschleunigungsraten und Geschwindigkeiten am Zunderbrecher

4. Zulassen der maximalen Beschleunigungsraten und Geschwindigkeiten an der Roughing Mill

5. Zulassen der maximalen Beschleunigungsraten und Geschwindigkeiten für Walzen und Reversieren

6. Einstellen der maximalen Kühlmenge

7. Nutzung der maximalen Geschwindigkeit zur Spalteinstellung

8. Frühes, hochfrequentes Einbringen der Brammen in die Walzanlage

9. Zulassen der maximalen Beschleunigungsraten und Geschwindigkeiten an der Fertigstraße

10. Ansteuerung der maximalen Kühlmenge

11. Setzen einer maximalen Geschwindigkeit bei gegebenen Restriktionen

12. Erlauben des Bandeinzuges vom Folgeband mit minimalem Anstand nach Verlassen des aktuellen Bandes aus einem ersten Walzgerüst

Die Befehlsgruppenansteuerung für das Automatisierungsziel "Minimale Produktivität" kann wie folgt sein:

1. Setzen eines geringen Volumens für Versorgungssysteme, beispielsweise Druckluft und Kühlmedien

2. Setzen der maximalen Ofen Auslauftemperatur

3. Einstellen der maximalen Beschleunigungsraten und Geschwindigkeiten am Zunderbrecher

4. Limitierung der maximalen Beschleunigungsraten und Geschwindigkeiten an der Roughing Mill

5. Zulassen geringer Beschleunigungsraten und Geschwindigkeiten für Walzen und Reversieren

6. Einstellen der minimalen Kühlmenge

7. Spalteinstellung mit reduzierter Geschwindigkeit

8. Einbringen der nachfolgenden Brammen in die Walzanlage in verringerter Taktfolge

9. Reduzierung der Beschleunigungsraten und Geschwindigkeiten an der Fertigstraße

10. Ansteuerung der minimal möglichen Kühlmenge

11. Setzen von angemessenen oberen Geschwindigkeitsgrenzen gemäß der gegebenen Restriktionen

Erlauben des Bandeinzuges vom Folgeband erst nachdem der Walzvorgang des aktuellen Bandes beendet ist

Bezugszeichenliste

| | |
|---|---|
| 1 | Priorisierungssystem |
| 2 | Auswahlebene des Priorisierungssystems |
| 3 | Zuordnungsebene des Priorisierungssystems |
| 4 | Informationsebene des Leitsystems |
| 5 | Befehlsgruppenebene des Leitsystems |
| A1-An | Automatisierungsziele |
| B1-Bn | Befehlsgruppen |
| R | Betriebsgrößen |
| W1-Wn | Wirkungsgruppen |

**Patentansprüche**

1. Verfahren zur Automatisierung einer Anlage zum Walzen von Metallbändern, umfassend wenigstens eine Walzstraße mit wenigstens einem Walzgerüst, wobei das Verfahren unter Verwendung eines mehrstufigen Leitsystems umfassend wenigstens eine Level-1 Automation und eine Level-2 Automation durchgeführt wird, wobei in der Level-2 Automation eine Vorabberechnung der Arbeitsgrößen der Anlage in Form von Setzwerten für die Level-1 Automation erfolgt, wobei das Level-1 System die von der Level-2 Vorgabe gesendeten Größen ansteuert, wobei unter Verwendung eines dem Leitsystem übergeordneten Priorisierungssystems (1), eine Auswahl eines vorgegebenen Automatisierungsziels zum Betrieb der Anlage mit einer übergeordneten Optimierungsstrategie vorgenommen wird und das Priorisierungssystem (1) entsprechend dem gewählten Automatisierungsziel Optimierungsvorgaben erzeugt und diese an die Level-1 und/oder Level-2 Automation übergibt, **dadurch gekennzeichnet, dass** in dem Priorisierungssystem (1) Befehlsgruppen für die verschiedenen Automatisierungsziele erzeugt werden und dass die Befehlsgruppen jeweils Vorgaben und/oder Grenzwerte für die Setzwerte umfassen, dass das Priorisierungssystem (1) eine Auswahlebene (2) und eine Zuordnungsebene (3) als Automatisierungsebene umfasst, dass in der Auswahlebene (2) das Automatisierungsziel festgelegt und/oder bereitgestellt wird und dass in der Zuordnungsebene (3) aufgrund von und/oder unter Verwendung von durch das Leitsystem erfassten Arbeitsgrößen aus dem Betrieb der Anlage Befehlsgruppen an das Leitsystem übergeben werden, dass die Befehlsgruppen über ein Expertensystem und/oder unter Zuhilfenahme künstlicher Intelligenz erzeugt werden und entsprechend der in der Auswahlebene (2) erfolgten Priorisierung ausgewählt und an das Leitsystem übergeben werden und dass als Automatisierungsziel verschiedene Szenarien für den Betrieb einer Walzstraße vorgesehen sind.

2. Verfahren nach Anspruch 1, **dadurch gekennzeichnet, dass** die Auswahl der vorgegebenen Automatisierungsziele manuell über den Benutzer und/oder automatisch regelbasiert und/oder über ein Expertensystem und/oder mit Hilfe von künstlicher Intelligenz erfolgt.

3. Verfahren nach einem der Ansprüche 1 oder 2, **dadurch gekennzeichnet, dass** eine automatische Auswahl eines Automatisierungsziels regelbasiert in Abhängigkeit von erfassten und/oder gemessenen Betriebsgrößen aus dem Betrieb der Anlage erfolgt, die von dem Leitsystem an das Priorisierungssystem (1) übergeben werden.

4. Verfahren nach einem der Ansprüche 1 bis 3, **dadurch gekennzeichnet, dass** durch das Leitsystem erfasste Arbeitsgrößen aus dem Betrieb der Anlage sowohl an die Auswahlebene (2) als auch an die Zuordnungsebene (3) übergeben werden.

**5.** Verfahren nach einem der Ansprüche 1 bis 4, **dadurch gekennzeichnet, dass** die Automatisierungsziele ausgewählt werden aus einer Gruppe von Automatisierungszielen umfassend wenigstens einen Energiesparmodus, einen Effizienzmodus, einen Hochleistungsmodus einen Modus mit optimiertem Anlagenverschleiß, einen Modus mit verringerter Abmaßlänge, einen Inbetriebnahme Modus, einen Aufwärmmodus, einen hinsichtlich der $CO_2$-Emissionen der Anlage optimierten Betriebsmodus, verschiedene Ein- und Ausfädelmodi und einem Qualitätsmodus.

**6.** Verfahren nach einem der Ansprüche 1 bis 5, **dadurch gekennzeichnet, dass** eine automatische Auswahl des Automatisierungsziels in Abhängigkeit der Auslastung des die Spannungsversorgung der Anlage bereitstellenden Stromversorgungsnetzes erfolgt.

**Claims**

**1.** Method for automation of a plant for the rolling of metal strips, comprising at least one rolling train with at least one roll stand, wherein the method is performed with use of a multi-stage control system comprising at least a level 1 automation and a level 2 automation, wherein advance computation of work variables of the plant in the form of set-point values for the level 1 automation is carried out in the level 2 automation, wherein the level 1 system controls the variables sent by the level 2 presetting, wherein selection of a predetermined automation target for operation of the plant with a superordinate optimisation strategy is undertaken with use of a prioritisation system (1) superordinate to the control system and the prioritisation system (1) generates optimisation presets in correspondence with the selected automation target and transfers these to the level 1 and/or level 2 automation, **characterised in that** command groups for different automation targets are generated in the prioritisation system (1), the command groups each comprise presets and/or limit values for the set-point values, the prioritisation system (1) comprises a selection plane (2) and an assignment plane (3) as automation plane, the automation target is fixed and/or prepared in the selection plane (2), command groups are transferred to the control system in the assignment plane (3) on the basis of and/or with use of work variables, which are detected by the control system, from the operation of the plant, the command groups are generated by way of an expert system and/or with the assistance of artificial intelligence and are selected in correspondence with the prioritisation carried out in the selection plane (2) and transferred to the control system, and different scenarios for operation of a rolling train are provided as automation target.

**2.** Method according to claim 1, **characterised in that** the selection of the predetermined automation targets is carried out manually by way of the user and/or automatically based on rules and/or by way of an expert system and/or with the help of artificial intelligence.

**3.** Method according to one of claims 1 and 2, **characterised in that** an automatic selection of an automation target based on rules is carried out in dependence on detected and/or measured operating variables, which are transferred by the control system to the prioritisation system (1), from the operation of the plant.

**4.** Method according to any one of claims 1 to 3, **characterised in that** work variables, which are detected by the control system, from the operation of the plant are transferred to both the selection plane (2) and the assignment plane (3).

**5.** Method according to any one of claims 1 to 4, **characterised in that** the automation targets are selected from a group of automation targets comprising at least an energy-saving mode, an efficiency mode, a high-performance mode, a mode with optimised plant wear, a mode with reduced dimensional length, a mode of placing in operation, a heating-up mode, an operating mode optimised with respect to $CO_2$ emissions of the plant, different modes of threading in and taking out and a quality mode.

**6.** Method according to any one of claims 1 to 5, **characterised in that** an automatic selection of the automation target is carried in dependence on the capacity utilisation of the current supply mains providing the voltage supply of the plant.

**Revendications**

**1.** Procédé d'automatisation d'une installation de laminage de bandes métalliques, comprenant au moins un train de laminoirs avec au moins une cage de laminoir, le procédé étant mis en œuvre en utilisant un système de commande à plusieurs niveaux comprenant au moins une automatisation de niveau 1 et une automatisation de niveau 2, dans lequel, dans l'automatisation de niveau 2, un calcul préalable des grandeurs de travail de l'installation sous forme de valeurs de consigne pour l'automatisation de niveau 1 est effectué, le système de niveau 1 commandant les grandeurs envoyées par la spécification de niveau 2, dans lequel, en utilisant un système de priorisation (1) superposé au système de commande, une sélection d'un objectif d'automatisation prédéfini pour l'exploitation de l'installation avec une stratégie d'optimisation supérieure est effectuée et le système de priorisation (1) génère, en fonction de l'objectif d'automatisation choisi, des spécifications d'optimisation et les transmet à l'automatisation de niveau 1 et/ou de niveau 2, **caractérisé en ce que** dans le système de priorisation (1), des groupes de commandes pour les différents objectifs d'automatisation sont générés et **en ce que** les groupes de commandes comprennent respectivement des spécifications et/ou des valeurs limites pour les valeurs de consigne, **en ce que** le système de priorisation (1) comprend un niveau de sélection (2) et un niveau d'affectation (3) en tant que niveau d'automatisation, **en ce que**, dans le niveau de sélection (2), l'objectif d'automatisation est défini et/ou fourni et **en ce que,** dans le niveau d'affectation (3), sur la base de et/ou en utilisant des grandeurs de travail de l'exploitation de l'installation saisies par le système de commande, des groupes de commandes sont transmis au système de commande, **en ce que** les groupes de commandes sont générés via un système expert et/ou à l'aide de l'intelligence artificielle et sont sélectionnés et transmis au système de commande conformément à la priorisation effectuée dans le niveau de sélection (2) et **en ce que,** en tant qu'objectif d'automatisation, différents scénarios pour l'exploitation d'un train de laminoirs sont prévus.

2. Procédé selon la revendication 1, **caractérisé en ce que** la sélection des objectifs d'automatisation prédéfinis s'effectue manuellement par l'utilisateur et/ou automatiquement sur la base de règles et/ou via un système expert et/ou à l'aide de l'intelligence artificielle.

3. Procédé selon l'une des revendications 1 ou 2, **caractérisé en ce qu'**une sélection automatique d'un objectif d'automatisation s'effectue sur la base de règles en fonction de grandeurs de service saisies et/ou mesurées de l'exploitation de l'installation, qui sont transmises par le système de commande au système de priorisation (1).

4. Procédé selon l'une des revendications 1 à 3, **caractérisé en ce que** des grandeurs de travail de l'exploitation de l'installation saisies par le système de commande sont transmises tant au niveau de sélection (2) qu'au niveau d'affectation (3).

5. Procédé selon l'une des revendications 1 à 4, **caractérisé en ce que** les objectifs d'automatisation sont sélectionnés dans un groupe d'objectifs d'automatisation comprenant au moins un mode d'économie d'énergie, un mode d'efficacité, un mode haute performance, un mode avec une usure optimisée de l'installation, un mode avec une longueur hors tolérance réduite, un mode de mise en service, un mode de préchauffage, un mode de service optimisé en ce qui concerne les émissions de $CO_2$ de l'installation, différents modes d'engagement et de dégagement et un mode qualité.

6. Procédé selon l'une des revendications 1 à 5, **caractérisé en ce qu'**une sélection automatique de l'objectif d'automatisation s'effectue en fonction de la charge du réseau d'alimentation électrique assurant l'alimentation en tension de l'installation.

Figur 1

Priorisierunssystem 1

**Auswahlebene 2**

Erzeugung übergeordneter Automatisierungsziele (II)

| Manuell | Regelbasiert | Experten System | Ki |

Priorisierungsvorgabe übergeordneter Automatisierungsziele (I)

| Manuell | Regelbasiert | Experten System | Ki |

Priorisierte übergeordnete Automatisierungsziele
A1=Prio 3, A2=Prio 5, ... Am=Prio k   (I)   (II)

übergeordnete Automatisierungsziele
A1, A2, ... Am

**Zuordnungsebene 3**

Befehlsgruppenerzeugung (J)

| Manuell | Regelbasiert | Experten System | Ki |

Befehlsgruppen B1, B2, ..., Bn

Wirkungsgruppenerzeugung (K)

| Manuell | Regelbasiert | Experten System | Ki |

Wirkungsgruppen W1, W2, ..., Wk

Wirkungsgruppenzuordnung (L)

| Manuell | Regelbasiert | Experten System | Ki |

Wirkungsgruppenzuordnung A1;B1;W1...Am;Bn;Wk

Befehlsgruppenaktivierung (M1) (M11) (M2)

| Manuell | Regelbasiert | Experten System | Ki |

Überwachung (N)
Adaption (O)
Modifikation (M3)

Betriebsgrößen R1, R2, ..., Ro

Befehlsgruppen B1, B2, ..., Bn

Figur 2

18

Figur 3

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102008028777 A1
- DE 102010036112 A1
- DE 10201036112 A1
- DE 10122322 A1
- EP 1324165 A2
- EP 3112961 A1
- EP 2407256 A1